# EUROPEAN PATENT APPLICATION

(11) **EP 3 879 875 A1**
(43) Date of publication of application: **15.09.2021**
(21) Application number: 19882525.9
(22) Date of filing: 04.11.2019
(51) Int. Cl.: H04W 24/04

(54) **RESOURCE CHANGE METHOD AND DEVICE, APPARATUS, AND STORAGE MEDIUM**

(30) Priority: 05.11.2018 CN 201811309562
(71) Applicant: Nanjin Zhongxing Software Co, Ltd., Yuhuatai District Nanjing, Jiangsu 210012 (CN)
(72) Inventor: YANG, Song, Nanjing, Jiangsu 210012 (CN)
(74) Representative: Aipex B.V.
(86) International application number: PCT/CN2019/115365
(87) International publication number: WO 2020/093976

(57) **Abstract**

A resource change method, apparatus and device and a storage medium. The method includes: acquiring (S101), by management and orchestration (MANO), first resource information and second resource information, where the first resource information is resource information corresponding to a new Virtual Network Function descriptor (VNFD), and the second resource information is resource information corresponding to an existing VNFD; determining (SI02), by the MANO, resource change information according to the first resource information and the second resource information; and performing (SI03), by the MANO, a resource change for a Virtual Network Function (VNF) instance according to the resource change information.

## Description

This application claims priority to Chinese Patent Application No. 201811309562.9 filed Nov. 5, 2018 and titled "RESOURCE CHANGE METHOD, APPRATUS AND DEVICE, AND STORAGE MEDIUM", the disclosure of which is incorporated herein by reference in its entirety.

### TECHNICAL FIELD

The present disclosure relates to the field of information technologies and relates to, but is not limited to, a resource change method, apparatus and device, and a storage medium.

### BACKGROUND

With the development of information technologies, Virtual Network Functions (VNFs) are gradually applied to the processing of information resources. The VNF carries much functional software processing through general-purpose hardware as well as virtualization technologies, thereby reducing the expensive device cost of a network. The NFV may be used for making the functions of a network device no longer depend on specific-purpose hardware by means of software and hardware decoupling and function abstraction so that resources can be sufficiently and flexibly shared, new traffic can be rapidly developed and deployed, and automatic deployment, elastic scaling, fault isolation, self-healing, and the like are performed based on actual traffic requirements. A VNF that has been deployed needs to possess an upgrade capability. The VNF can be switched among a plurality of versions through an upgrade operation, to adapt to different environmental requirements. However, in the related art, the upgrade operation on the VNF often involves only the update of software rather than the update of resources. This manner cannot satisfy a complex and variable network environment at present.

### SUMMARY

In view of this, the present disclosure provides a resource change method, apparatus and device and a storage medium, so as to solve at least one problem in some cases.

An embodiment of the present disclosure provides a resource change method including steps described below. Management and orchestration (MANO) acquires first resource information and second resource information, where the first resource information is resource information corresponding to a new VNF descriptor (VNFD), and the second resource information is resource information corresponding to an existing VNFD. The MANO determines resource change information according to the first resource information and the second resource information. The MANO performs a resource change for a Virtual Network Function (VNF) instance according to the resource change information.

An embodiment of the present disclosure further provides a resource change apparatus. The apparatus includes an acquisition unit, a determination unit and a change unit. The acquisition unit is configured to cause MANO to acquire first resource information and second resource information, where the first resource information is resource information corresponding to a new VNFD, and the second resource information is resource information corresponding to an existing VNFD. The determination unit is configured to determine resource change information according to the first resource information and the second resource information. The change unit is configured to perform a resource change for a Virtual Network Function (VNF) instance according to the resource change information.

An embodiment of the present disclosure further provides a resource change device. The device includes a memory and a processor, where the memory stores a computer program executable by the processor, and the processor executes the computer program to perform the resource change method described above.

An embodiment of the present disclosure further provides a computer-readable storage medium. The computer-readable storage medium stores computer-executable instructions configured for executing the resource change method described above.

### BRIEF DESCRIPTION OF DRAWINGS

FIG. 1 is a schematic diagram of a VNF update in specifications of the European Telecommunications Standards Institute;
FIG. 2A is a flowchart of a resource change method according to an embodiment of the present disclosure;
FIG. 2B is a flowchart of another resource change method according to an embodiment of the present disclosure;
FIG. 3 is a flowchart of another resource change method according to an embodiment of the present disclosure;
FIG. 4 is a flowchart of another resource change method according to an embodiment of the present disclosure;
FIG. 5 is a flowchart of another resource change method according to an embodiment of the present disclosure;
FIG. 6 is a structure diagram of a resource change apparatus according to an embodiment of the present disclosure; and
FIG. 7 is a hardware entity structure diagram of a resource change device according to an embodiment of the present disclosure.

### DETAILED DESCRIPTION

For a better understanding of various embodiments of the present disclosure, the following nouns are explained below.

European Telecommunications Standards Institute (ETSI) is a non-profit telecommunications standardization organization whose setup in 1988 was approved by the European Commission and which is headquartered in Nice, southern France. The field of standardization of the ETSI is mainly the telecommunications industry and relates to the field of information and broadcast in cooperation with other organizations.

VNF refers to a specific virtual network function, provides a certain network service, and is a software that is deployed in a virtual machine or a physical machine using NFV Infrastructure (NFVI).

Network functions virtualization (NFV) is a virtualization technology or concept that solves the problem where network functions are deployed on general-purpose hardware.

A virtual machine (VM) refers to a complete computer system that is simulated by software, has functions of a complete hardware system, and runs in a fully isolated environment.

A virtualized infrastructure manager (VIM) controls allocation of virtual resources for the VNF, such as virtual computing, virtual storage and a virtual network.

A VNFD is a configuration template that describes deployment and operation behaviors of one VNF module.

NFV MANO is applied to manage and coordinate the architectural framework of the VNF and other software components. The industry specification group of the ETSI defines the architecture of MANO to facilitate the deployment and connection of services when the VNF is isolated from a physical device and moved to the virtual machine (VM). The MANO has three main function blocks: an NFV Orchestrator, a VNF Manager and the VIM manager. The NFV Orchestrator consists of two layers: service orchestration and resource orchestration, and the NFV Orchestrator can control new network services and integrate the VNF into virtual architecture. The NFV Orchestrator can also authenticate and authorize resource requests from the NFV Infrastructure (NFVI). The VNF Manager can manage a life cycle of the VNF. The VIM can control and manage the NFVI which includes computing, storage and network resources.

The NFV Orchestrator (NFVO) is configured to manage a life cycle of a Network Service (NS), to coordinate the management of the life cycle of the NS and the management the life cycle of the VNF, and to coordinate management of various types of resources of the NFVI, thereby ensuring an optimized configuration of the various types of resources and connections as required.

The VNF Manager (VNFM) is configured to manage a life cycle of a virtualized network function module.

Rollback refers to an act of restoring a program or data to a last correct state in response to a processing error of the program or the data and includes program rollback, data rollback and other types.

At present, a VNF update defined in an ETSI specification "gs_nfv-ifa011v020301p.pdf" is as follows:
A VNF that has been deployed needs to possess an upgrade capability. The VNF can be switched among a plurality of versions through an upgrade operation, to adapt to different environmental requirements. Such an upgrade operation is generally performed for a certain VNF instance, and an operator may initiate an upgrade request from a network management system. The upgrade changes only an application software version of the VNF without changing underlying virtual resources. The VNF instance cannot be terminated during the upgrade operation.

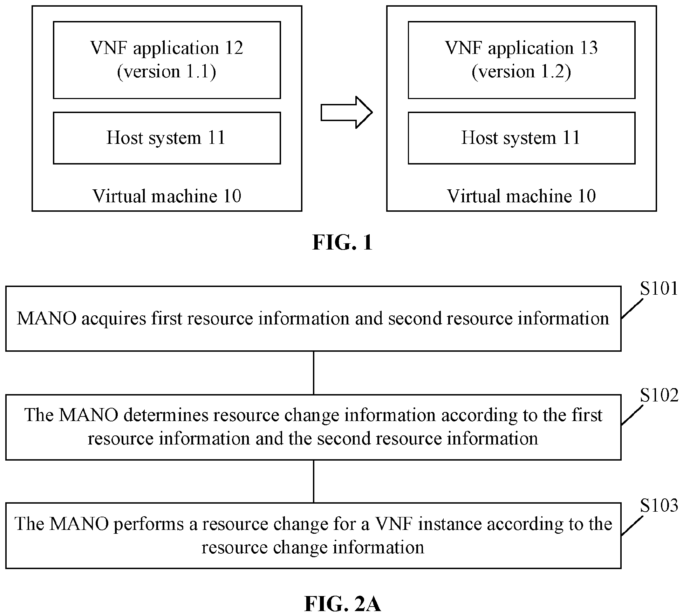

FIG. 1 is a schematic diagram of a VNF update in ETSI specifications. A virtual machine 10 is implemented by a host system 11, and a VNF application 12 of version 1.1 is upgraded to a VNF application 13 of version 1.2. The VNF update defined in the ETSI specifications is to update a software of the VNF application without terminating the VNF and involves no change of a VNF resource. However, in practice, during either an initial traffic commissioning process or a running process of an existing network, a virtual resource used by an instantiated VNF needs to be adjusted.

For example, for a VNF that has been instantiated and runs online, a user generally needs to add a new virtual machine with a known specification or a virtual machine with a new specification to the VNF again, to add a new network card to an existing virtual machine or to add a new IP with a same IP address segment as an existing network card, to delete a network card or a certain IP of a network card to which a plurality of IPs are bound, or to adjust various requirements which involve resource changes, such as adjusting a specification of a specified virtual machine.

Embodiments of the present disclosure provide a feasible solution for the preceding VNF update operation involving resource changes.

A description is provided below in conjunction with embodiments.

An embodiment of the present disclosure provides a resource change method which is used in a resource change device. A function implemented by the method may be implemented by a processor in the resource change device calling a program code which may, of course, be stored in a computer storage medium. It can be seen that the resource change device includes at least the processor and the storage medium.

FIG. 2A is a flowchart of a resource change method according to an embodiment of the present disclosure. As shown in FIG. 2A, the method includes steps described below.

In step S101, MANO acquires first resource information and second resource information. The first resource information is resource information corresponding to a new VNFD, and the second resource information is resource information corresponding to an existing VNFD.

A VNF instance is described by a VNFD. A client may instruct the MANO to complete the instantiation of a VNF by creating the VNFD, thereby creating a new VNF instance. To perform a resource change for an existing VNF instance, description information of a changed VNF instance needs to be acquired firstly. The MANO may obtain description information of an updated VNF instance according to the new VNFD and know a resource situation of the VNF instance after the resource change is completed according to the description information. The first resource information is obtained according to the new VNFD sent by the client. The second resource information is description information of the existing VNF instance, that is, the second resource information is obtained by the MANO according to the existing VNFD. The MANO may clearly know resource situations before and after the change according to the first resource information and the second resource information.

In step S102, the MANO determines resource change information according to the first resource information and the second resource information.

Herein, in fact, the MANO compares the first resource information and the second resource information. After comparison, the MANO determines which specific resources need to be changed before and after the resource change, and performs the resource change against the information with changes.

In step S103, the MANO performs the resource change for the VNF instance according to the resource change information.

After determining the resource change information, the MANO performs the resource change for the existing VNF instance according to the resource change information. The resource change includes adding or deleting a virtual machine to an existing VNF instance, adjusting a specification of a virtual machine in the existing VNF instance, adjusting a network card, adjusting a space size of a system cloud disk used by a virtual machine, and adding or deleting a cloud disk.

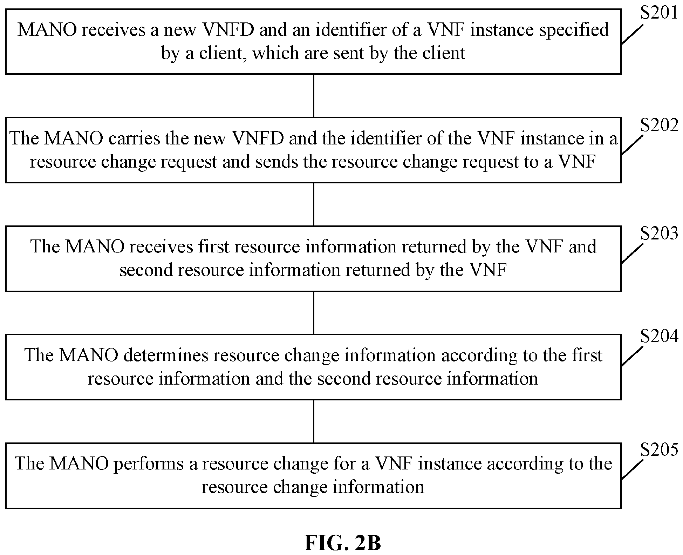

An embodiment of the present disclosure provides another resource change method. As shown in FIG. 2B, the method includes steps described below.

In step S201, MANO receives a new VNFD and an identifier of a VNF instance specified by a client, which are sent by the client.

In step S202, the MANO carries the new VNFD and the identifier of the VNF instance in a resource change request and sends the resource change request to a VNF

In step S203, the MANO receives first resource information returned by the VNF and second resource information returned by the VNF

The VNF generates the first resource information described by the new VNFD according to the new VNFD, and acquires the second resource information described by an existing VNFD according to the identifier.

When the client determines that a resource change needs to be performed for a VNF instance, the client creates the new VNFD for describing a changed VNF instance. The client also specifies the VNF instance to be changed, sends the new VNFD to the MANO, and sends the identifier capable of indicating the VNF instance specified by the client to the MANO together with the new VNFD.

The MANO generates the resource change request carrying the preceding VNFD and the identifier and sends the resource change request to the VNF. At this time, the VNF generates the first resource information described by the new VNFD according to the new VNFD, searches for a corresponding existing VNF instance according to the identifier, and obtains the second resource information described by the existing VNFD according to the existing VNFD.

In step S204, the MANO determines resource change information according to the first resource information and the second resource information.

In step S205, the MANO performs the resource change for the Virtual Network Function (VNF) instance according to the resource change information.

Steps S204 and S205 are same as steps S102 and S103 in embodiment one. Details are not repeated here.

In other embodiments, the MANO includes an NFVO and a VNFM.

The step in which the MANO carries the new VNFD and the identifier of the VNF instance in the resource change request and sends the resource change request to the VNF includes steps described below.

In step S11, the NFVO carries the new VNFD and the identifier of the VNF instance in the resource change request and sends the resource change request to the VNFM.

In step S 12, the VNFM sends the resource change request to the VNF

The MANO is composed of the NFVO, the VNFM and other modules. After receiving the new VNFD and the identifier of the specified VNF instance, which are sent by the client, the NFVO carries the VNFD and the identifier in the resource change request and sends the resource change request to the VNFM. In fact, the VNFO and the VNFM cooperate with each other to perform virtualized network function module management for virtual resources. After obtaining the resource change information, the VNFM sends the resource change information to the VNF to request the resource change to be performed for the VNF instance.

In other embodiments, the step in which the MANO determines the resource change information according to the first resource information and the second resource information includes a step described below.

In step S21, in response to a name of a mirror image file in the VNFD being consistent with a name of a mirror image file in the new VNFD, the VNFM determines the resource change information according to the first resource information and the second resource information.

In an embodiment, the VNFM compares whether the name of the mirror image file in the existing VNFD is consistent with the name of the mirror image file in the new VNFD. If not, the process is terminated. If so, the VNFM determines the resource change information according to the first resource information and the second resource information.

The VNFM compares the name of the mirror image file in the new VNFD with the name of the mirror image file in the existing VNFD. When the names are inconsistent, the process is terminated. Reasons are as follows: a name of a mirror image file may indicate a corresponding VNF instance; when the name of the mirror image file in the VNFD corresponding to the specified VNF instance is inconsistent with the name of the mirror image file in the new VNFD, it indicates that the mirror image files are incorrect and the new VNFD does not correspond to the existing VNFD. In this case, the VNF cannot complete the resource change for the specified VNF instance. Therefore, whether the name of the mirror image file in the existing VNFD is consistent with the name of the mirror image file in the new VNFD is checked, so that whether the new VNFD sent by the client is incorrect can be determined, thereby ensuring the accuracy of the resource change.

In other embodiments, the step in which the MANO determines the resource change information according to the first resource information and the second resource information includes steps described below.

In step S31, the VNFM compares the first resource information and the second resource information and obtains a comparison result.

In step S32, the VNFM determines the resource change information according to the comparison result, where the resource change information includes a resource addition, a resource deletion or a resource modification.

After the VNFM obtains the first resource information and the second resource information, then the VNFM determines a description in the existing VNFD for describing the existing VNF instance and a description in the new VNFD for describing the changed VNF instance. For these descriptions, the VNFM compares the new VNFD with the existing VNFD and obtains the comparison result which includes differences between the new VNFD and the existing VNFD. The VNFM may determine the resource change information according to these differences. The resource change information is in fact change content for changing the existing VNF instance to obtain a new VNF instance. The resource change information includes the resource addition, the resource deletion or the resource modification. After the resource change information is determined, the resource change may be performed for a respective VNF instance.

In other embodiments, the MANO further includes a VIM.

The step in which the MANO performs the resource change for the Virtual Network Function (VNF) instance according to the resource change information includes steps described below.

In step S41, in response to the resource change information including information about the resource addition, the VIM updates an existing resource according to the information about the resource addition.

In step S42, in response to the resource change information including information about the resource modification, the VIM modifies the existing resource according to the information about the resource modification.

The resource modification includes modifying a specification of a virtual machine, modifying an interface of a virtual machine, modifying a network card of a virtual machine, modifying a space size of a cloud disk used by a virtual machine or the like.

In step S43, in response to the resource change information including information about the resource deletion, the VIM determines whether the updating or the modifying fails; and in response to a failure of neither the updating nor the modifying, the VIM deletes the existing resource according to the information about the resource deletion.

The resource change information may include the resource addition, the resource modification and the resource deletion. A sequence of performing resource changes is first performing resource addition, then performing resource modification, and last performing resource deletion.

Firstly, the VIM determines whether the resource change information includes the information about the resource addition. When the resource addition needs to be performed, the VIM performs the resource addition according to the information about the resource addition. Then, it is determined whether the resource change information includes the information about the resource modification. When the resource modification needs to be performed, the VIM performs the resource modification according to the information about the resource modification.

In other embodiment, the step in which in response to the resource change information including the information about the resource addition, the VIM updates the existing resource according to the information about the resource addition includes steps described below.

In step S51, in response to the resource change information including the information about the resource addition, the VNFM determines whether a size of the resource addition exceeds a resource reservation.

In step S52, in response to the size of the resource addition not exceeding the resource reservation, the VIM updates the existing resource according to the information about the resource addition.

If the resource addition needs to be performed, a sufficient resource reservation is required in a resource pool of the VNF. If the size of the resource addition exceeds the resource reservation, the resource cannot be updated successfully. Therefore, when the size of the resource addition exceeds the resource reservation, the process is terminated, and a subsequent resource change operation is not continued. When the resource reservation is sufficient, the VIM updates the existing resource according to the information about the resource addition to complete the resource addition.

In other embodiments, in response to a failure of the resource addition, the VIM performs a rollback strategy according to the resource change information to reperform the resource addition.

Rollback is performed only in the case of the resource addition because the resource addition is more likely to fail and affected by many environmental factors, for example, the resource addition fails since an IP address is occupied. Meanwhile, when the rollback is performed in the case where the resource addition fails, a state before execution is easily restored to. Moreover, if the resource modification and the resource deletion have already failed, generally the resource modification and the resource deletion after rollback would fail either. For example, if a virtual machine fails to be deleted, a network environment might be unstable or a cloud platform service might be abnormal. In this case, after performing a rollback thereto, it would fail to create a virtual machine correspondingly either. Moreover, since the resource modification or deletion is performed after the resource addition succeeds, if a rollback is performed for a failed resource deletion or for a failed resource modification, a rollback would also need to be performed for a failed resource addition, hence performing a rollback for a failed resource deletion or for a failed resource modification, would cause unnecessary waste of resources. Therefore, the rollback is performed only when the resource addition fails, and the process may be directly terminated when the resource modification or deletion fails.

A VNF runs on a virtualized platform. The MANO needs to perform the management and orchestration for application resources and to perform the deployment and the operation and maintenance for subsequent resources for the VNF

Due to the diversity of traffic of the VNF, there are many categories of resources in description files of the VNF. However, the MANO, as a general application resource management and orchestration platform, cannot perform a customized service for each VNF. Therefore, a resource change referred to herein includes several changes described below.

First, an addition or deletion of a virtual machine in an instantiated VNF is supported.

Second, an operation of adjusting a specification of a virtual machine in an instantiated VNF is supported. For example, the specification of the virtual machine is adjusted to a large specification or reduced to a small specification.

Third, an operation of adjusting a network card of a virtual machine in an instantiated VNF is supported. For example, it is supported to add a network card, delete a network card, modify an IP address of a network card, and so on.

Fourth, for certain one or more virtual machines in an instantiated VNF, it is allowed to modify a space size of a system cloud disk used by them.

Fifth, for certain one or more virtual machines in the instantiated VNF, a data cloud disk is allowed to be added or deleted for them.

Sixth, a virtual machine relationship group change, which mainly includes adding or deleting, is supported. For example, an affinity relationship group or a mutually exclusive relationship group change is supported.

The several resource operations described above are common among different VNFs, and may satisfy resource change requirements in most scenarios.

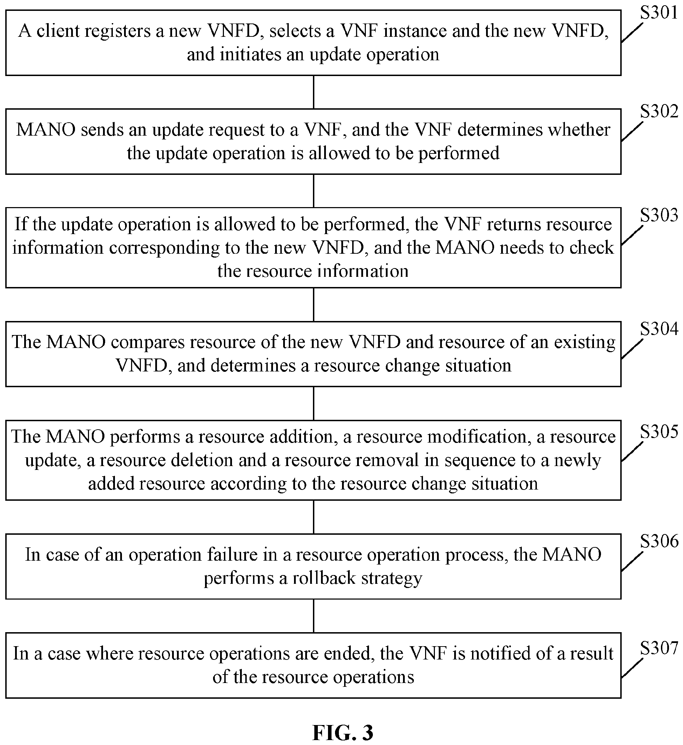

An embodiment of the present disclosure provides a resource change method. As shown in FIG. 3, the method includes steps described below.

In step S301, a client registers a new VNFD, selects a VNF instance and the new VNFD, and initiates an update operation.

In step S302, MANO sends an update request to a VNF, and the VNF determines whether the update operation is allowed to be performed.

In step S303, if the update operation is allowed to be performed, the VNF returns resource information corresponding to the new VNFD, and the MANO needs to check the resource information.

In step S304, the MANO compares resource of the new VNFD and resource of an existing VNFD, and determines a resource change situation.

In step S305, the MANO performs a resource addition, a resource modification, a resource update, a resource deletion and a resource removal in sequence to a newly added resource according to the resource change situation. Operations to be supported include operations described below.

First, an addition or deletion of a virtual machine in an instantiated VNF is supported.

Second, an operation of adjusting a specification of a virtual machine in an instantiated VNF is supported. For example, the specification of the virtual machine is adjusted to a large specification or reduced to a small specification.

Third, an operation of adjusting a network card of a virtual machine in an instantiated VNF is supported. For example, it is supported to add a network card, delete a network card, modify an IP address of a network card, and so on.

Fourth, for certain one or more virtual machines in an instantiated VNF, it is allowed to modify a space size of a system cloud disk used by them.

Fifth, for certain one or more virtual machines in the instantiated VNF, a data cloud disk is allowed to be added or deleted for them.

Sixth, a virtual machine relationship group change, which mainly includes adding or deleting, is supported. For example, an affinity relationship group or a mutually exclusive relationship group change is supported.

In step S306, in case of an operation failure in a resource operation process, the MANO performs a rollback strategy.

Rollback is performed only in the case of the resource addition because the resource addition is more likely to fail and affected by many environmental factors, for example, the resource addition fails since an IP address is occupied. Meanwhile, when the rollback is performed in the case where the resource addition fails, a state before execution is easily restored to. Moreover, if the resource modification and the resource deletion have already failed, generally the resource modification and the resource deletion after rollback would fail either, which is meaningless. For example, if a virtual machine fails to be deleted, a network environment might be unstable or a cloud platform service might be abnormal. In this case, after performing a rollback thereto, it would fail to create a virtual machine correspondingly either. Moreover, a rollback performed after a failed resource deletion or for a failed resource modification, would leads to a rollback performed for a previous successful resource addition, causing waste of resources.

Therefore, the rollback strategy is performed only when the resource addition fails.

In step S307, in a case where resource operations are ended, the VNF is notified of a result of the resource operations.

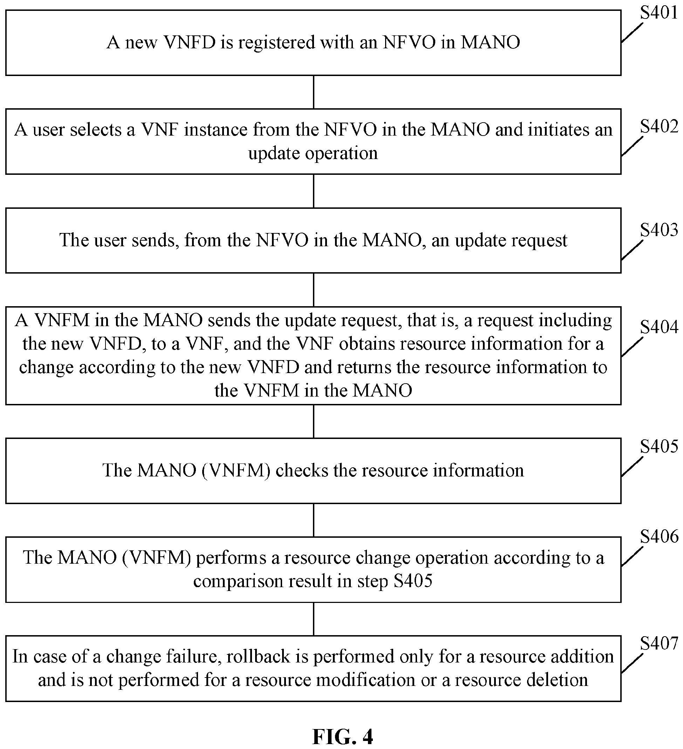

An embodiment of the present disclosure provides a resource change method. As shown in FIG. 4, the method includes steps described below.

In step S401, a new VNFD is registered with an NFVO in MANO.

Before this step, it is necessary to ensure that both the NFVO and a VNFM in the MANO run normally, a VNF instance has been deployed and runs normally, and a new VNFD has been orchestrated.

In step S402, a user selects a VNF instance from the NFVO in the MANO and initiates an update operation, that is, specifies the new VNFD to initiate the update operation.

In step S403, the user sends, from the NFVO in the MANO, an update request, that is, a request including the new VNFD, to the VNFM in the MANO.

In step S404, the VNFM in the MANO sends the update request, that is, the request including the new VNFD, to a VNF, and the VNF obtains resource information for a change according to the new VNFD and returns the resource information to the VNFM in the MANO.

In step S405, the VNFM in the MANO checks the resource information.

Check items include items described below.

First, a mirror image file in the new VNFD and a mirror image file in an existing VNFD are acquired, and whether a name of the mirror image file in the new VNFD and a name of the mirror image file in the existing VNFD are consistent is checked. In this case, contents of the mirror image files cannot be compared. Therefore, only the names of the mirror image files are compared.

Second, whether a resource addition exceeds a resource reservation situation is checked.

Since an addition precedes a deletion, a sum of existing resources and changed resources, including added resources after expansion and the resource change, needs to be compared. The sum of these resources is smaller than reserved resources of the instance. If the sum of the resources is smaller than the reserved resources of the instance, the check succeeds and the subsequent comparison is continued; otherwise, the process is terminated.

Third, the new VNFD and the existing VNFD are compared within the following range.

The range includes: (1) added virtual machines are compared; (2) deleted virtual machines are compared; (3) modified virtual machines are compared, which includes comparing differences in CPUs and in memories, comparing differences in networks, in network ports and in IPs, comparing differences sizes of cloud disks, and comparing added or deleted cloud disks, and so on; (4) differences between affinity relationship groups and mutually exclusive relationship groups are compared.

In step S406, the VNFM in the MANO performs a resource change operation according to a comparison result in step S405. The resource change operation includes the resource addition, a resource modification and a resource deletion.

For operations of adding a resource and enlarging a resource specification, resource authorization is required. However, authorization is not required for modifying or deleting a resource.

The VNFM in the MANO requests resource change operation from a VIM. After the VIM completes the resource change operation, the VNFM processes a resource change result and determines whether a change fails.

In step S407, in case of a change failure, rollback is performed only for the resource addition and is not performed for the resource modification or the resource deletion.

The resource change may be performed in a sequence described below.

First, if an added resource exists, the resource addition is performed. In response to a failure of the resource addition, the process is terminated and a rollback strategy is performed on the resource.

An addition of a virtual machine or an addition of other resources or a mutually exclusive relationship group of a virtual machine belongs to the resource addition. After the added resource is created successfully, the resource modification is performed. In response to a failure of the resource modification, no rollback is performed.

Second, a resource is modified. Adding a network port, adding a new specification, and adding a cloud disk to an existing virtual machine all belong to the resource modification.

Third, after both the resource addition and the resource modification succeed, an unnecessary resource is deleted. If the resource deletion fails, no rollback is performed. If the deletion succeeds, rollback is performed.

Fourth, the resource deletion is performed, which includes deleting a virtual machine or deleting other resources, an elastic group, a mutually exclusive relationship group or the like of an added virtual machine.

To conclude, an update operation involving a resource change may be performed by this method for a VNF that runs online in an actual production environment. Typical VNF flexibility is only allowed to add or delete a virtual machine in several predefined specifications, i.e., a preset scheme of automatically allocating virtual machines (e.g., a virtual machine is automatically added when traffic is busy and a virtual machine is automatically deleted when traffic is idle), at deployment. However, these automatic allocations are only allowed to preset specifications, which does not involve an addition or deletion of a virtual machine with a new specification and are not allowed to adjust networking resources. Compared with the typical VNF flexibility, the embodiments of the present disclosure perform the resource change within a larger range based on the new VNFD and can add or delete the preceding virtual machine and adjust the networking resources.

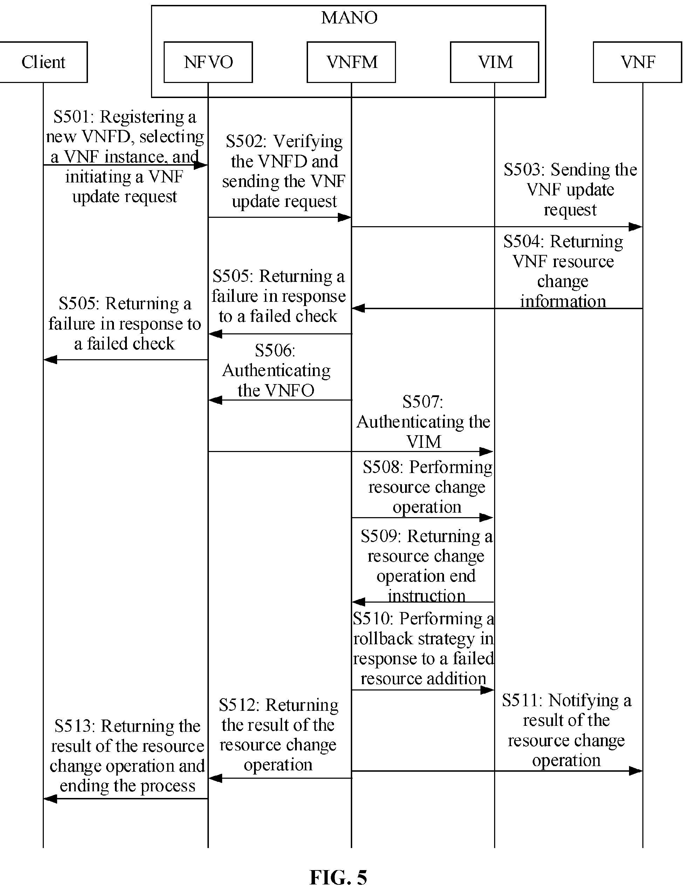

An embodiment of the present disclosure provides a resource change method. As shown in FIG. 5, the method includes steps described below. In step S501, a client registers a new VNFD, selects a VNF instance, and initiates a VNF update request to MANO. In step S502, an NFVO in the MANO performs parameter verification on the received new VNFD and initiates the VNF update request to a VNFM in the MANO in response to a successful verification. The VNF update request includes information related to the VNFD. In step S503, the VNFM in the MANO sends the VNF update request to a VNF. In step S504, the VNF performs parameter parsing according to the received VNF update request, calculates a resource change involved in the new VNFD, and returns calculated resource change information to the VNFM. In step S505, the VNFM checks mirror image information in the new VNFD and mirror image information in an existing VNFD and checks a resource reservation situation. If the check fails, a failure is returned and the process is terminated. In step S506, if the check succeeds, resource change situations are compared and the NFVO is authenticated. In step S507, after the VNFO is authenticated successfully, a VIM is authenticated. In step S508, after the VIM is authenticated successfully, the VNFM performs a resource change operation on the VIM. In step S509, the VIM returns a resource change operation end instruction to the VNFM after the change is completed. In step S510, the VNFM checks whether there is a failed resource change and if so, a rollback strategy is performed. In step S511, after the resource change is completed, the VNFM notifies the VNF of a result of the resource change operation. In step S512, the VNFM returns the result of the resource change operation to the NFVO. In step S513, the NFVO returns the result of the resource change operation to the client and ends the process.

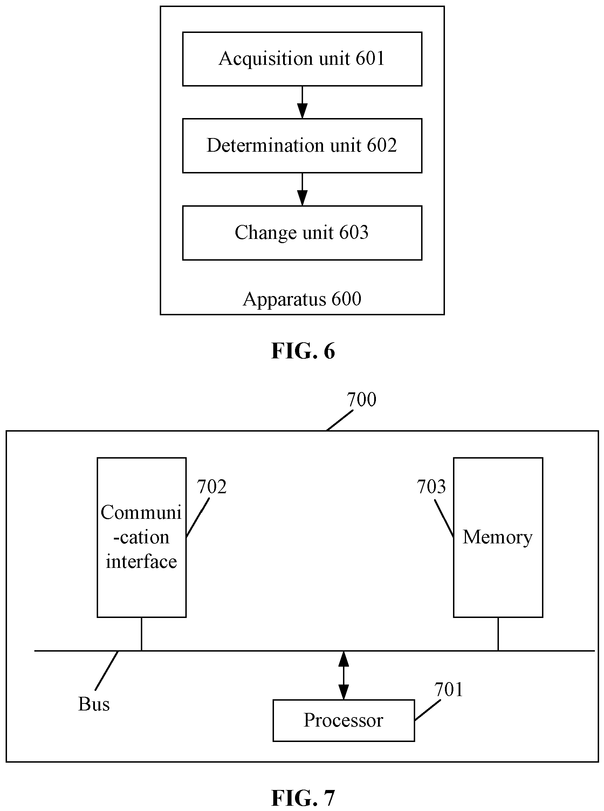

An embodiment of the present disclosure further provides a resource change apparatus. As shown in FIG. 6, the apparatus includes an acquisition unit 601, a determination unit 602 and a change unit 603. The acquisition unit 601 is configured to cause MANO to acquire first resource information and second resource information, where the first resource information is resource information corresponding to a new VNFD, and the second resource information is resource information corresponding to an existing VNFD. The determination unit 602 is configured to determine resource change information according to the first resource information and the second resource information. The change unit 603 is configured to perform a resource change for a Virtual Network Function (VNF) instance according to the resource change information.

In other embodiments, the determination unit includes a first receiving unit, a sending unit and a second receiving unit. The first receiving unit is configured to receive the new VNFD and an identifier of a VNF instance specified by a client, which are sent by the client. The sending unit is configured to carry the new VNFD and the identifier of the VNF instance in a resource change request and send the resource change request to a VNF. The second receiving unit is configured to receive the first resource information returned by the VNF and the second resource information returned by the VNF

In other embodiments, the MANO includes an NFVO and a VNFM, and the sending unit includes a first sending module and a second sending module. The first sending module is configured to carry the new VNFD and the identifier of the VNF instance in the resource change request and send the resource change request to the VNFM. The second sending module is configured to send the resource change request to the VNF

In other embodiments, the determination unit is configured to: in response to a name of a mirror image file in the existing VNFD being consistent with a name of a mirror image file in the new VNFD, determine the resource change information according to the first resource information and the second resource information.

In other embodiments, the determination unit includes a comparison module and a determination module. The comparison module is configured to compare the first resource information and the second resource information and obtain a comparison result. The determination module is configured to cause the VNFM to determine the resource change information according to the comparison result, where the resource change information includes a resource addition, a resource deletion or a resource modification.

In other embodiments, the MANO further includes a VIM, and the change unit includes an addition module, a modification module and a deletion module. The addition module is configured to: in response to the resource change information including information about the resource addition, update an existing resource according to the information about the resource addition. The modification module is configured to: in response to the resource change information including information about the resource modification, modify the existing resource according to the information about the resource modification; where the resource modification includes modifying a specification of a virtual machine, modifying an interface of a virtual machine, modifying a network card of a virtual machine, or modifying a space size of a cloud disk used by a virtual machine. The deletion module is configured to: in response to the resource change information including information about the resource deletion, determine whether the updating or the modifying fails and in response to a failure of neither the updating nor the modifying, delete the existing resource according to the information about the resource deletion.

In other embodiments, the addition module includes a determination submodule and an update submodule. The determination submodule is configured to: in response to the resource change information including the information about the resource addition, determine whether a size of the resource addition exceeds a resource reservation. The update submodule is configured to: in response to the size of the resource addition not exceeding the resource reservation, update the existing resource according to the information about the resource addition.

In other embodiments, the apparatus further includes a rollback unit. The rollback unit is configured to: in response to a failure of the resource addition, perform a rollback strategy according to the resource change information to reperform the resource addition.

The description of the preceding apparatus embodiments is similar to the description of the preceding method embodiments and the apparatus embodiments have beneficial effects similar to those of the method embodiments. For technical details not disclosed in the apparatus embodiments of the present disclosure, reference may be made to the description of the method embodiments of the present disclosure for understanding.

It is to be noted that in the embodiments of the present disclosure, the resource change method, if implemented in the form of software function modules and sold or used as an independent product, may also be stored in a computer-readable storage medium. Based on such an understanding, the technical solutions in the embodiments of the present disclosure substantially, or the part contributing to some cases, may be embodied in the form of a software product. The computer software product is stored in a storage medium and includes several instructions for enabling a resource change device to perform all or part of the method according to each embodiment of the present disclosure. The preceding storage medium includes a USB flash disk, a mobile hard disk, a read-only memory (ROM), a magnetic disk, an optical disk or other media capable of storing program codes. In this manner, the embodiments of the present disclosure are not limited to any particular combination of hardware and software.

Accordingly, an embodiment of the present disclosure provides a resource change terminal. The terminal includes a memory and a processor. The memory stores a computer program executable by the processor, and the processor executes the program to perform steps of the resource change method according to the embodiments described above.

Accordingly, an embodiment of the present disclosure provides a computer-readable storage medium. The computer-readable storage medium stores a computer program configured for executing steps of the resource change method according to the embodiments described above when executed by a processor.

It is to be noted that the description of the preceding storage medium and device embodiment is similar to the description of the preceding method embodiments, and the preceding storage medium and device embodiment have beneficial effects similar to those of the method embodiments. For technical details not disclosed in the storage medium and device embodiment of the present disclosure, reference may be made to the description of the method embodiments of the present disclosure for understanding.

It is to be noted that FIG. 7 is a schematic diagram of a hardware entity of a resource change device according to an embodiment of the present disclosure. As shown in FIG. 7, the hardware entity of the resource change device 700 includes a processor 701, a communication interface 702 and a memory 703.

The processor 701 is generally configured to control an overall operation of the resource change device 700.

The communication interface 702 may enable the resource change device to communicate with another terminal or server via a network.

The memory 703 is configured to store instructions and applications executable by the processor 701 and may also cache data (such as image data, audio data, voice communication data and video communication data) to be processed by the processor 701 and to be processed or already processed by various modules in the resource change device 700. The memory 703 may be implemented by a flash memory or a random-access memory (RAM).

It is to be understood that "one embodiment" or "an embodiment" mentioned throughout the description refers to that particular features, structures or characteristics related to an embodiment are included in at least one embodiment of the present disclosure. Therefore, the phrase "in one embodiment" or "in an embodiment" appearing throughout the description does not necessarily refer to the same embodiment. In addition, these particular features, structures or characteristics may be combined in one or more embodiments in any suitable manner. It is to be understood that in various embodiments of the present disclosure, the serial numbers of the preceding processes do not mean an execution sequence and the execution sequence of the preceding processes should be determined according to their functions and internal logics, which should not limit an implementation process of the embodiments of the present disclosure in any improper manner. The serial numbers in the preceding embodiments of the present disclosure are for purposes of description only and do not indicate superiority and inferiority of the embodiments.

It is to be noted that as used herein, the term "include", "contain" or any other variant thereof is intended to encompass a non-exclusive inclusion so that a process, method, article or apparatus that includes a series of elements not only includes these elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

It is to be understood that the devices and the methods disclosed in the embodiments of the present disclosure may be implemented in other manners. The device embodiment described above is only illustrative. For example, the division of units is only a division of logical functions, and, in practice, the division of units may be implemented in other manners. For example, a plurality of units or components may be combined or may be integrated into another system, or some features may be omitted or not executed. In addition, coupling, direct coupling or communication connections between the presented or discussed components may be indirect coupling or communication connections between devices or units via interfaces and may be electrical, mechanical or in other forms.

The units described above as separate components may or may not be physically separated. Components presented as units may or may not be physical units, that is, may be located in one place or may be distributed over a plurality of network units. Part or all of these units may be selected according to practical requirements, so as to achieve objects of the solutions in the embodiments of the present disclosure.

In addition, various function units in the embodiments of the present disclosure may all be integrated in one processing unit, or each unit may be used as a separate unit, or two or more units may be integrated into one unit. The integrated function unit may be implemented by hardware or may be implemented by hardware plus a software function unit.

It is to be understood by those having ordinary skill in the art that all or part of the steps in the preceding method embodiments may be implemented by related hardware instructed by programs. The preceding programs may be stored in a computer-readable storage medium and, when executed, execute steps including those in the preceding method embodiments. The preceding storage medium includes various media capable of storing program codes, such as a mobile storage device, a read-only memory (ROM), a magnetic disk or an optical disk.

Alternatively, the preceding integrated unit in the present disclosure, if implemented in the form of a software function module and sold or used as an independent product, may also be stored in a computer-readable storage medium. Based on such an understanding, the technical solutions in the embodiments of the present disclosure substantially, or the part contributing to some cases, may be embodied in the form of a software product. The computer software product is stored in a storage medium and includes several instructions for enabling a resource change device (which may be a computer, a server or the like) to perform all or part of the method according to each embodiment of the present disclosure. The preceding storage medium includes various media capable of storing program codes, such as a mobile storage device, a ROM, a magnetic disk or an optical disk.

According to the technical solutions provided by the embodiments of the present disclosure, an update operation involving a resource change can be performed for a VNF instance that runs online in an actual application environment. Moreover, compared with existing VNF flexibility, the embodiments of the present disclosure perform the resource change within a larger range based on a new VNFD and can implement the resource change on a virtual machine with a new specification.

The above are only the embodiments of the present disclosure and are not to limit the scope of the present disclosure. Within the technical scope disclosed by the present disclosure, any change or substitution easily conceivable to any person skilled in the art falls within the scope of the present disclosure. Therefore, the scope of the present disclosure is subject to the scope of the claims.

## Claims

1. A resource change method, comprising:
acquiring, by management and orchestration, MANO, of network functions virtualization, first resource information and second resource information, wherein the first resource information is resource information corresponding to a new Virtual Network Function descriptor, VNFD, and the second resource information is resource information corresponding to an existing VNFD;
determining, by the MANO, resource change information according to the first resource information and the second resource information; and
performing, by the MANO, a resource change for a Virtual Network Function, VNF, instance according to the resource change information.

2. The method of claim 1, wherein acquiring, by the MANO, the first resource information and the second resource information comprises:
receiving, by the MANO, the new VNFD and an identifier of a VNF instance specified by a client, which are sent by the client;
carrying, by the MANO, the new VNFD and the identifier of the VNF instance in a resource change request, and sending the resource change request to a VNF; and
receiving, by the MANO, the first resource information returned by the VNF and the second resource information returned by the VNF

3. The method of claim 2, wherein the MANO comprises a Network Functions Virtualization Orchestrator, NFVO, and a Virtual Network Function Manager, VNFM; and wherein carrying, by the MANO, the new VNFD and the identifier of the VNF instance in the resource change request, and sending the resource change request to the VNF comprises:
carrying, by the NFVO, the new VNFD and the identifier of the VNF instance in the resource change request, and sending the resource change request to the VNFM; and
sending, by the VNFM, the resource change request to the VNF

4. The method of claim 3, wherein determining, by the MANO, the resource change information according to the first resource information and the second resource information comprises:
in response to a name of a mirror image file in the existing VNFD being consistent with a name of a mirror image file in the new VNFD, determining, by the VNFM, the resource change information according to the first resource information and the second resource information.

5. The method of claim 4, wherein determining, by the MANO, the resource change information according to the first resource information and the second resource information comprises:
comparing, by the VNFM, the first resource information and the second resource information, and obtaining a comparison result; and
determining, by the VNFM, the resource change information according to the comparison result, wherein the resource change information comprises a resource addition, a resource deletion or a resource modification.

6. The method of claim 5, wherein the MANO further comprises a Virtualized Infrastructure Manager, VIM; and
wherein performing, by the MANO, the resource change for the VNF instance according to the resource change information comprises:
in response to the resource change information comprising information about the resource addition, updating, by the VIM, an existing resource according to the information about the resource addition;
in response to the resource change information comprising information about the resource modification, modifying, by the VIM, the existing resource according to the information about the resource modification; wherein the resource modification comprises modifying a specification of a virtual machine, modifying an interface of a virtual machine, modifying a network card of a virtual machine, or modifying a space size of a cloud disk used by a virtual machine; and
in response to the resource change information comprising information about the resource deletion, determining, by the VIM, whether the updating or the modifying fails, and in response to a failure of neither the updating nor the modifying, deleting the existing resource according to the information about the resource deletion.

7. The method of claim 6, wherein in response to the resource change information comprising the information about the resource addition, updating, by the VIM, the existing resource according to the information about the resource addition comprises:
in response to the resource change information comprising the information about the resource addition, determining, by the VNFM, whether a size of the resource addition exceeds a resource reservation; and
in response to the size of the resource addition not exceeding the resource reservation, updating, by the VIM, the existing resource according to the information about the resource addition;
the method further comprises: in response to a failure of the updating the existing resource according to the information about the resource addition, performing, by the VIM, a rollback strategy according to the resource change information to reperform the resource addition.

8. A resource change apparatus, comprising:
an acquisition unit, which is configured to cause management and orchestration, MANO, of network functions virtualization to acquire first resource information and second resource information, wherein the first resource information is resource information corresponding to a new Virtual Network Function descriptor, VNFD, and the second resource information is resource information corresponding to an existing VNFD;
a determination unit, which is configured to determine resource change information according to the first resource information and the second resource information; and
a change unit, which is configured to perform a resource change for a Virtual Network Function, VNF, instance according to the resource change information.

9. A resource change device, comprising a memory and a processor, wherein the memory stores a computer program executable by the processor, and the processor executes the computer program to perform the resource change method of any one of claims 1 to 7.

10. A storage medium storing computer-executable instructions configured for executing the resource change method of any one of claims 1 to 7.
